# EUROPEAN PATENT APPLICATION

(11) **EP 4 459 060 A1**
(43) Date of publication of application: **06.11.2024**
(21) Application number: 24170599.5
(22) Date of filing: 16.04.2024
(51) Int. Cl.: E04B 1/26, E04B 7/02, E04B 1/24, E04C 3/02

(54) **A PLATE MEMBER AND RETAINING FOR ANCHORING PERFORATED BRACE BANDS AND METHOD OF MANUFACTURE**

(30) Priority: 02.05.2023 EP 23171066
(71) Applicant: Illinois Tool Works Inc., Glenview IL 60025 (US)
(72) Inventor: FRIIS BUHL, Morten, Glenview, 60025 (US); MELGAARD ERIKSEN, Amalie, Glenview, 60025 (US)
(74) Representative: HGF

(57) **Abstract**

A plate member is disclosed, for anchoring one or more perforated brace bands. The plate member comprises one or more locating pins suitable for locating with one or more perforations of a perforated brace band, a step portion, the step portion comprising at least one aperture configured to guidingly receive the perforated brace band; and one or more recesses located along one or more edges of the plate member. The one or more recesses configured to receive a retaining clip. A method of manufacture and kit is further disclosed.

## Description

The present invention relates to a single piece plate member for anchoring perforated brace bands, a retaining clip suitable for use with the single piece plate member, and a method of manufacture thereof. The disclosure relates to fasteners in general, and in particular bracing systems, such as, for example, perforated brace band systems for building and roof structures.

### Introduction

In construction, bracing systems are used to strengthen and reinforce buildings and other structural frameworks, so as to withstand lateral forces when exposed to extreme wind and/or seismic activity. In particular, bracing systems are commonly used for timber frame structures and roof trusses, but also for steel frame structures.

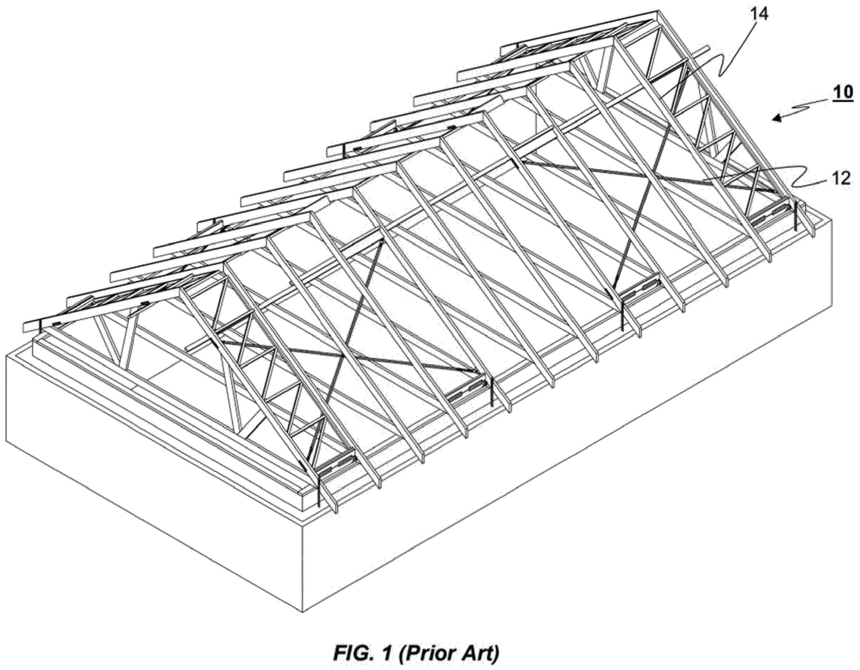

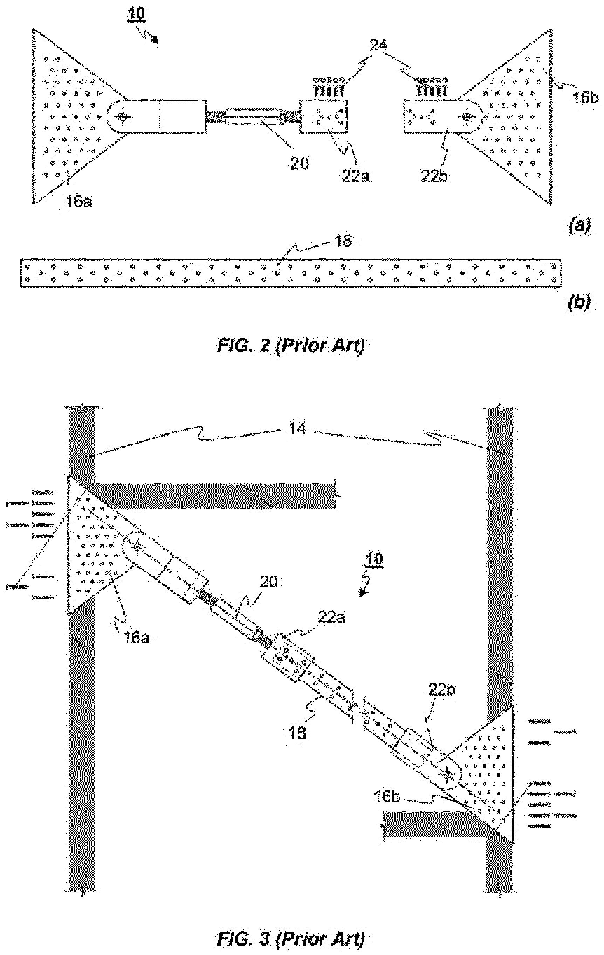

Figure 1 illustrates wind bracing applied to a timber-framed roof (i.e. a roof truss). Here, a typical wind brace band system 10 may comprise perforated bracing bands 12 or straps that are installed diagonally across a number of roof trusses 14 or rafters. A more detailed example of a known wind brace band system 10 is illustrated in Figure 2, comprising two end brackets 16a, 16b for attachment to the truss 14, at least one perforated brace band 18, at least one tensioner 20 and a first and a second attachment plate 22a and 22b (including nuts and bolts 24). During assembly, the perforated brace band 18 is coupled to the attachment plates 22a, 22b using a plurality of bolts and nuts 24 that are inserted through respective holes of the attachment plates 22a, 22b and the perforated brace band 18, while the tensioner 20 is at its maximum extension. The end brackets 16a, 16b are then mounted to respective sections of the roof trusses 14 (i.e. diagonally across) and the assembly is tensioned to a predetermined force via the tensioner 20. It will be understood that the order of assembly may be varied, and the order of construction is not prescribed by the above.

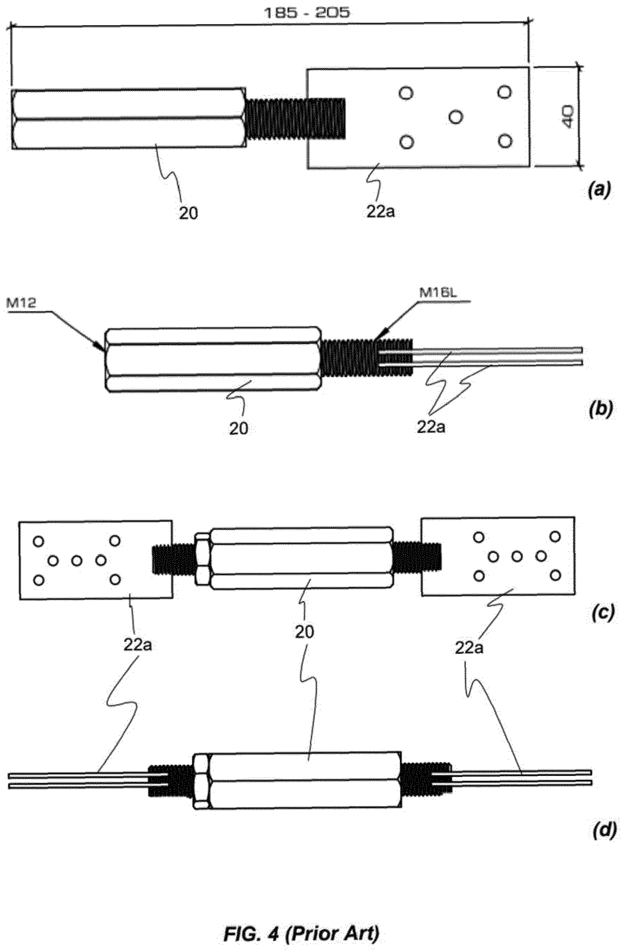

Figure 3 illustrates the assembled wind brace band system 10 installed diagonally to roof trusses 14. Figures 4 (a) and (b) illustrates top view and side view of a coupling between the tensioner 20 and two attachment plates 22a spaced apart so as to allow an end portion of the perforated band 18 to slide in between the two attachment plates and fixed with the bolts and nuts 24. The tensioner 20 can take the form of an extended nut and the coupling may be a threaded rod, although it will be apparent that any suitable tensioner and coupling may be used. Figure 4 (c) and (d) illustrates a top view and a side view of the coupling provided on either side of the tensioner 20 allowing end portions of the perforated brace band 18 to be connected to respective attachment plates 22a on both sides of the tensioner 20.

However, the process of joining the perforated brace band 18 to one or more attachment plates 22a is cumbersome and time consuming, requiring additional tools and hardware (e.g. bolts and nuts 24). Alternative solutions to join the perforated brace band 18 to the end brackets 16 (e.g. via attachment plates 22a or 22b) may utilise an additional bottom plate that comprises fixed pins to joiningly receive an end portion of the perforated brace band 18 at one end section and an end portion of a plate member at the other end section. However, this solution requires further locking elements and tooling to safely secure the coupled perforated brace band and plate member, which will add to the assembly costs, increase the time required to assemble the brace, as well as, provide a potential risk for the joint components to disengage (e.g. if not secured properly). Such plate members can also be difficult to manufacture if incorporating extra parts to provide fixation points and introducing time consuming extra manufacturing step, such as riveting.

Therefore, it is an object of the present invention to provide a brace band system with improved ease of use, that may be fitted without the use of additional tools (i.e. be fitted "tool free"), that is less time-consuming during assembly, easier to manufacture and which is more cost effective. In particular, it is an object of the present invention to provide an improved connector for joining the band and/or tensioner of a bracing system with a perforated brace band and method of manufacture thereof.

### Summary of the Invention

According to a first example of the disclosure, there is provided a plate member for anchoring one or more perforated brace bands, wherein: the plate member comprises: one or more locating pins suitable for locating with one or more perforations of a perforated brace band; a step portion, the step portion comprising at least one aperture configured to guidingly receive the perforated brace band; and one or more recesses located along one or more edges of the plate member, the one or more recesses configured to receive a retaining clip optionally wherein the plate member is a single piece plate member and further optionally wherein the one or more locating pins are integral locating pins. Manufacturing the plate from a single piece advantageously minimises cost and complexity of the manufacturing process. By forming the locating pins integrally extra manufacturing steps such as welding or riveting locating pins to the plate can be avoided. The inclusion of one or more recesses configured to receive a retaining clip facilitates easy use of the plate member, as a perforated brace band can be located on the locating pins and then held in place by fastening the retaining clip over the perforated band and locating the clip in the one or more recesses. This may be performed by hand without the need of extra tools.

Suitably, the one or more recesses prevent movement of the retaining clip in the first direction, and optionally wherein the one or more locating pins are arranged to abut a retaining clip, and further optionally wherein the one or more locating pins prevent movement of the retaining clip in a first direction. The retaining clip grips the plate member using one or more hook-like members, this prevents the retaining clip moving away from plate member. However, without extra means the retaining clip may slide along a surface of the plate member potentially compromising the security of a brace band held by the clip to the plate member. The sliding movement of the retaining clip may also be arrested by the one or more recesses of the plate member which are sized to capture the width of the retaining clip, thereby preventing sliding of the clip. The recesses also assist in fitting the retaining clip to the plate member by providing a point of positive engagement of the retaining clip with the plate member, preventing undesirable movement of the parts relative to one another during fixing the retaining clip to the plate member. The plate member may be made such that it can receive multiple retaining clips. Further, by optionally elongating the locating pins such that the pins have a length that may pass through the perforated band, and then extend beyond, the locating pins may serve to prevent sliding movement of the clip along the plate member, as the plate member sliding movement is arrested by the elongated locating pins.

According to a second example of the disclosure, there is provided a retaining clip suitable for use with the plate member of the first example of the disclosure. The retaining clip comprises means to urge a perforated brace band towards the plate member and sandwich a perforated brace band between the retaining clip and the plate member. Optionally the retaining clip, or part thereof (such as an arm) is sized to straddle a width of the plate member and the retaining clip having a width sized substantially to engage with the one or more recesses of the plate member. The retaining clip, by straddling a width of the plate member, can be made of a size to provide a secure retention of a perforated brace band located between the retaining clip and plate member, than, for example, a split pin located through a locating pin. Providing the retaining clip with means to urge the perforated band towards the plate member further ensures a snug fit between the parts. Suitable means to urge can include forming the retaining clip from a sprung metal and shaping the retaining clip in a bow, such that an apex of the bow is, when in place, closer to the plate member than the ends of the bow. Multiple of the same or different urging means may be provided on a single clip.

According to a third example of the disclosure, there is provided a method of manufacturing a plate member according to the first example or a retaining clip according to the second example. The method comprising stamping the plate member or retaining clip out of a sheet of material in a single step. In this way manufacturing steps are minimised. The plate member, for example, maybe provided with the integral pins in the single manufacturing step thereby negating the need for additional welding or riveting steps to fix separate pins to the plate member.

According to a fourth example of the disclosure, there is provided a kit of parts comprising a plate member, the plate member comprising one or more locating pins suitable for locating with one or more perforations of a perforated brace band (300); and a step portion, the step portion comprising at least one aperture configured to guidingly receive the perforated brace band. The kit further comprises the retaining clip as hereinbefore described.

Preferably, the plate member of the kit further comprises one or more recesses located along one or more edges of the plate member, the one or more recesses configured to receive a retaining clip. Optionally the plate member is a single piece plate member and further optionally the one or more locating pins are integral locating pins.

### Brief Description of the Drawings

Example embodiment(s) of the invention are now described, by way of example only, hereinafter with reference to the accompanying drawings, in which:
**Figure 1** **(Prior Art)** shows a typical use of a known wind brace band system, installed between trusses of a timber roof structure;
**Figure 2** **(Prior Art)** illustrates a front view of the individual component parts of a typical wind brace band system including (a) two end brackets, a tensioner and one or more attachment plates (incl. nuts and bolts) and (b) a perforated brace band of a predetermined length;
**Figure 3** **(Prior Art)** illustrates a front view of the wind brace band system shown in Figure 2 assembled and installed between trusses of a roof structure;
**Figure 4** **(Prior Art)** shows (a) a top-view and (b) a side view of a first-type tensioner coupling with two superimposed attachment plates on one end, and (c) a top-view and (d) a side view of a second-type tensioner coupling with two superimposed attachment plates on both ends;
**Figure 5** show (a) a plan view and (b) side view of a single piece plate member;
**Figure 6** shows a side view of a retaining clip;
**Figure 7** show (a) a plan view and (b) side view of a single piece plate member with a retaining clip fitted;
**Figure 8** shows a plan view of a single piece plate member with a perforated brace band held in place by a retaining clip; and
**Figure 9** shows (a) a perspective view and (b) cross section of a single piece plate member with an alternative retaining clip fitted.

### Detailed Description

The described example embodiment relates to a connector for a brace band system, and in particular for a wind brace band system particularly suitable for timber structures, such as roof trusses. However, the invention is not necessarily restricted to bracing systems for timber structures but may also be used with any other perforated band system that requires some kind of connection with the perforated band.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner. Like reference numerals are used to depict like features throughout. Also, the terms 'rivet' and 'pin' are used interchangeably and are intended to include permanently attached pins or rivets (e.g. glued, soldered or welded etc.), but also pins and rivets removably coupled, such as, rivets that are attached and fixingly retained through a suitable aperture (friction-lock rivet or movable pins).

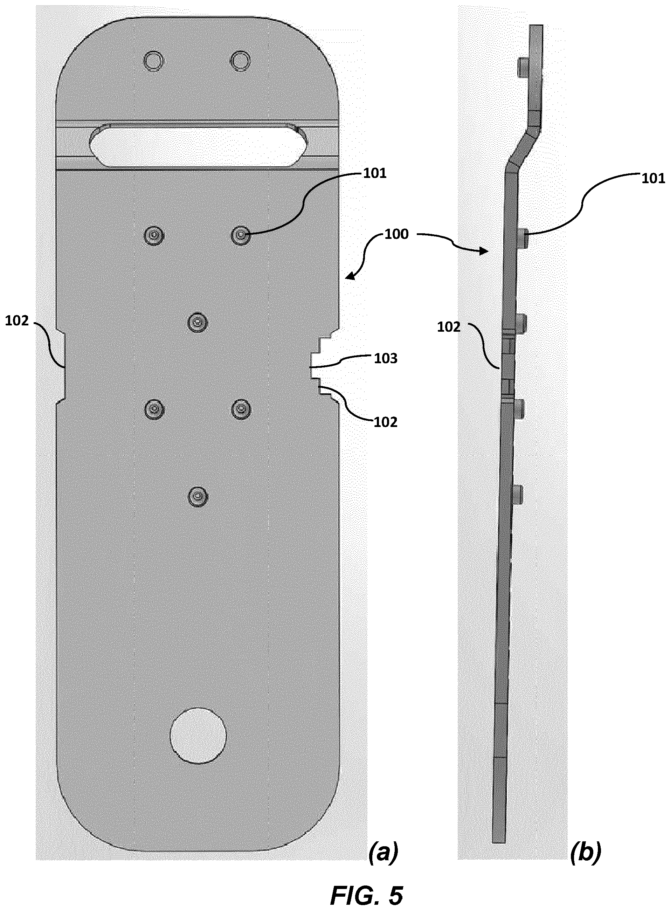

Referring now to Figures 5(a) and 5(b) there is shown a single piece plate member (100). Single piece here means that the plate member (100) and all its constituent elements are formed from a single piece of mother material and all of those elements are integral to the single piece plate member. No external parts or extra material form the single piece plate member.

The plate member (100) comprises at least one integral locating pin. The integral locating pin is formed by stamping and deforming the plate to produce the pin. The pins are shown as capped, but could be provided with through apertures (i.e. the plate could be stamped through the full thickness). Preferably multiple locating pins (101) are provided that can locate into the multiple perforations of a perforated brace band, to ensure a secure hold and connection between the plate member and the perforated brace band. The locating pins (101) may be elongated such that the height of the retaining pins may be greater than the thickness of the perforated brace band. In this way the locating pins (101) may optionally provide a dual purpose in being able to arrest movement of a retaining clip (200) along a length of the plate member, as the increased height means that movement of the retaining clip would be hindered as it would abut the pins as the retaining clip slid along a surface of the plate member.

The plate member (100) is also provided with a step portion and aperture, through which the perforated brace band may be placed. Further integral locating pins (101) are located on the step portion on an opposite face of the plate member compared to the first integral pins. These opposing pins may be formed at the same time as the first integral pins. The point of these opposing pins is to locate in perforations of the perforated brace band, but from an opposite side of the perforated brace band relative to the first integral pins, therefore reducing the risk of separation or dislocation of the perforated brace band from the plate member.

At least one recess is provided along a length of the plate member (100), the length running parallel with the direction that a perforated brace band would run along the plate member. The plate member is arranged such that the width of the plate member from the interior of a recess to another side of the plate member (or interior of a second recess opposite the first recess) is substantially equal to, or greater than the width of the perforated brace band. As such, at least some portions of the plate member, particularly those adject a recess must be greater than the width of the plate member, in order to be able to provide sufficient material for a recess to exist. The one or more recesses provide locating points for a retaining clip (200). The recesses trap the retaining clip when fitted to the plate member and prevent movement of the clip along the length of the plate member, by sliding for example. The plate member may be formed of any suitable material such that the plate member may fulfil its purpose, that is to securely hold a perforated brace band for connection to further items in construction of a building, typically this would be a metal, such as steel.

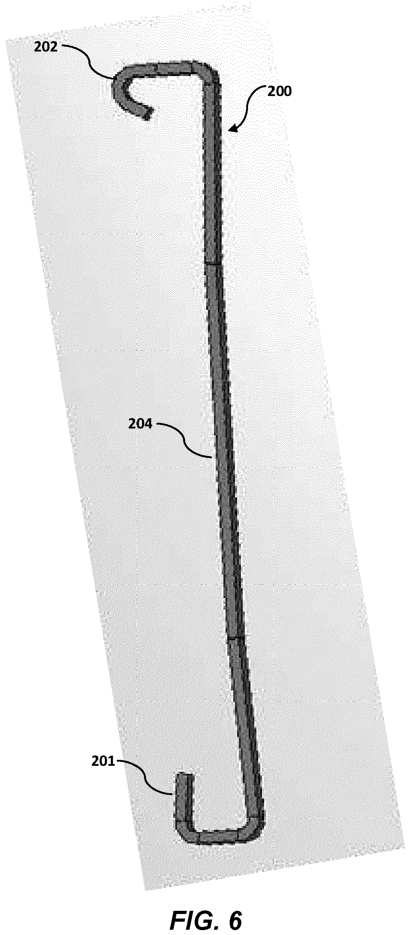

With reference to Figure 6 there is provided a retaining clip (200). The retaining clip is formed of a single piece of material and comprises a body having length corresponding to a width of the plate member (100), preferably to the width between the interior of at least one recess and the opposing side, or interior of a second recess opposite the first recess, of the plate member, such that the retaining clip may straddle the width of the plate member completely. Arranged at either end of the length of the retaining clip are hooking members (201, 202) arranged to wrap around the edge of the plate member and grip onto the plate member, fixing the retaining clip to the plate member. At least one of the hooking members may be sized to "snap fit" to the plate member, such that on hooking one end of the retaining clip to the plate member, and then urging the snap fit hooking member (202) towards the plate member causes the snap fit hooking member to temporarily deform as it passes the plate member and then settles into a new stable shape once it has passed the plate member, thereby snapping into place. Preferably this may be achieved by hand without any further tools. Preferably the fitment of the clip to the plate member may be reversible, either by hand or by use of a tool. One or more recesses of the plate member may be provided with a well (103) into which a tool may be inserted, such as a screwdriver, to enable levering of the retaining clip away from the plate to release the retaining clip. The important part is that any such detachment should only occur on the application of a determined force by a user to remove the retaining clip.

The retaining clip (200) may further be provided with a bow shape such that an apex of the bow (204) is, when in place, closer to the plate member (100) than the ends of the bow. Multiple of the same or different urging means may be provided on a single clip. Providing a bow shape ensures that the retaining clip, in use, urges the perforated band towards the plate member. The clip shown in the figures shows a single bow along the entire length of the retaining clip. However the bow may be off set, or not endure the entire length of the retaining clip. Multiple smaller bows may be provided along the length of the retaining clip provided the function of urging the perforated band towards the plate member is preserved. The retaining clip may be formed of any suitable resilient material that allows the retaining clip to perform its function, that is to grip the plate member and hold a perforated brace band in place on the plate member. The material will typically be metal, such as a spung steel.

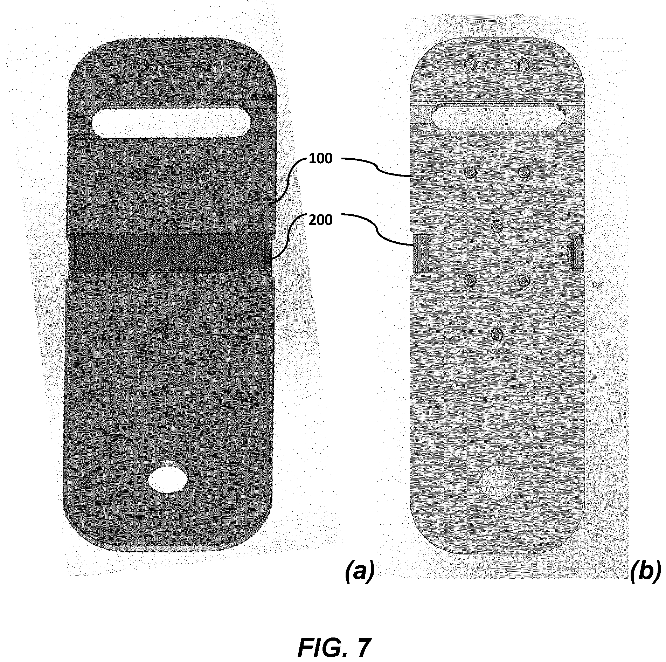

Figures 7(a) and (b) show a retaining clip (200) located upon plate member (100). In figure 7(a) the retaining clip is shown straddling the width of the plate member between the interior of a pair of opposing recesses. The retaining clip may have a width along at least part of its length that corresponds to the size of a gap between the elongated integral locating pins (101), in this way the elongated pins (101) may optionally be arranged to abut either side of the fitted retaining clip and prevent sliding movement of the retaining clip. Sliding movement of the retaining clip is further prevented by locating the hooking members into the recesses of the plate. In Figure 7(b) the hooking member can be seen gripping the opposite side of the plate.

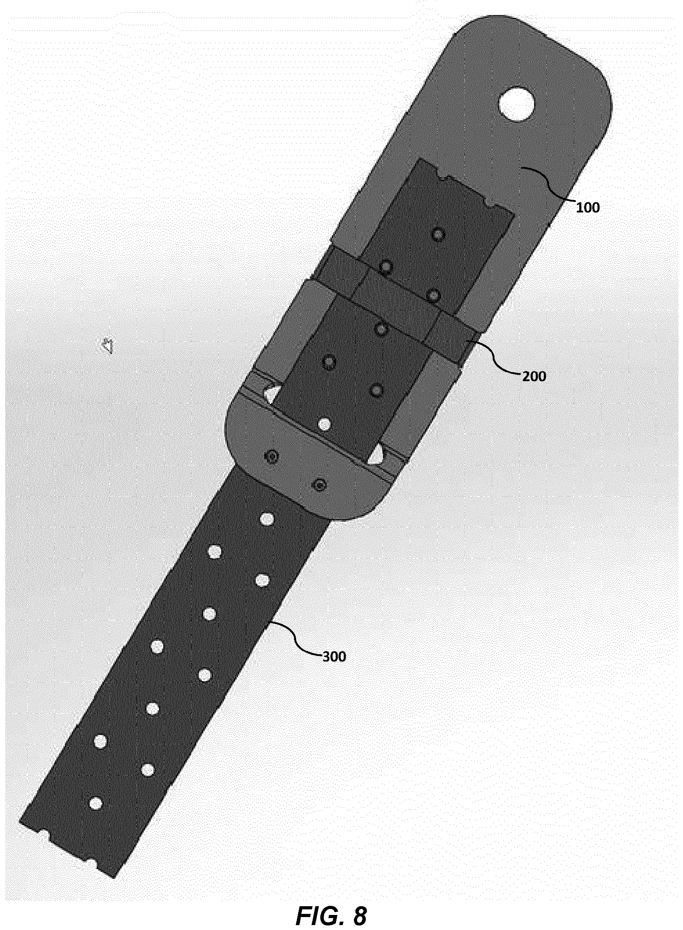

Figure 8 shows a perforated brace band held in place upon a single piece plate member (100) and retained by the retaining clip (200). Sliding movement of the retaining clip along the plate member is arrested by both the recesses and the optionally elongated integral locating pins (101).

The plate member (100) and the retaining clip (200) may be manufactured in a single step such as via stamping or pressing the parts out from a sheet of material using, for example, a die cutter, this includes the step portion and integral locating pins (101) on one or both faces of the plate member.

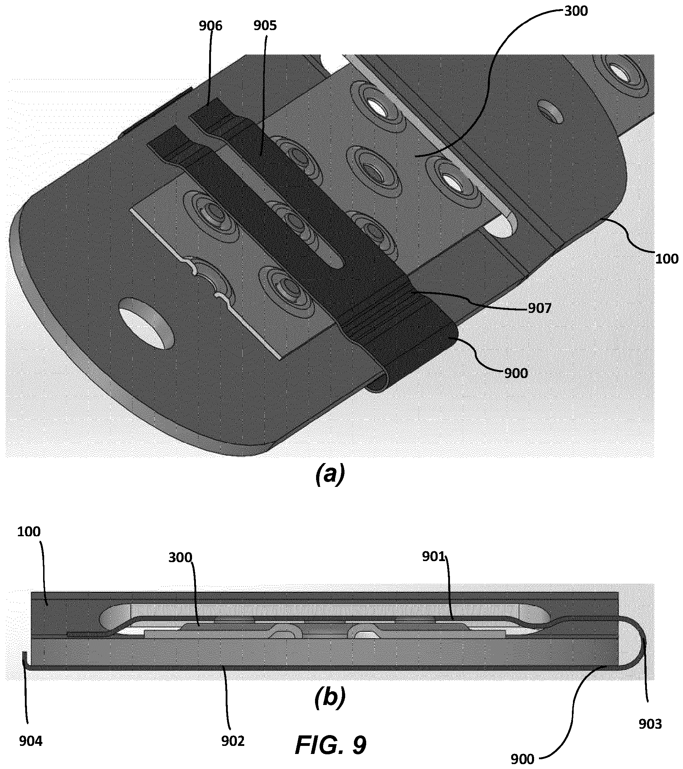

With reference to Figure 9 there is provided an alternative retaining clip (900). The retaining clip is formed of a single piece of material. The clip (900) is substantially "C" or "U" shaped such that it may grasp and/or clasp the plate member (100) and the band (300) between a pair of arms (901, 902) forming the alternative retaining clip. The arms are connected to a spring section (903) which urge the arms towards one another allowing clasping of the plate member (100) and band (300).

One or more of the arms may be sized to have a length corresponding to a width of the plate member (100) and provided with a hook (904) or other grasping means to clutch an edge of the plate member to thereby resist removal of the clip. At least one of the arms may be sized to "snap fit" to the plate member, such that on placing the clip about the plate and band, one arm snaps into place about the plate. Preferably this may be achieved by hand without any further tools. Preferably the fitment of the clip to the plate member may be reversible, either by hand or by use of a tool.

One of the arms (901) may be provided with one or more fingers (905) to straddle a locating pin therebetween. This ensures that the locating pins do not interfere with fitment of the retaining clip. The fingers may apply a force urging the band and the plate together, the force applied at tips (906) of the fingers, remote from the spring section of the retaining clip. This may be achieved or enhanced by providing a second sprung section (907) along one of the arms or fingers.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. A plate member (100) for anchoring one or more perforated brace bands, wherein:
the plate member (100) comprises:
one or more locating pins (101) suitable for locating with one or more perforations of a perforated brace band (300);
a step portion, the step portion comprising at least one aperture configured to guidingly receive the perforated brace band; and
one or more recesses (102) located along one or more edges of the plate member (100), the one or more recesses configured to receive a retaining clip (200).

2. A plate member (100) as claimed in claim 1, wherein the plate member is a single piece plate member.

3. A plate member (100) as claimed in claim 1 or claim 2, wherein the one or more locating pins are integral locating pins.

4. A plate member (100) as claimed in any previous claim, wherein the one or more recesses prevent movement of the retaining clip (200) in the first direction.

5. A plate member (100) as claimed in any previous claim, wherein the one or more locating pins (101) are arranged to abut a retaining clip (200).

6. A plate member (100) as claimed in any previous claim, wherein the one or more locating pins (101) prevent movement of the retaining clip (200) in a first direction.

7. A retaining clip (200) suitable for use with the plate member (100) of any previous claim, wherein the retaining clip (200) comprises means to urge a perforated brace band towards the plate member (100) and sandwich a perforated brace band between the retaining clip (200) and the plate member (100).

8. A retaining clip (200) as claimed in claim 7, wherein the retaining clip (200) is sized to straddle a width of the plate member (100).

9. A retaining clip (200) as claimed in claim 7 or claim 8, wherein the retaining clip (200) has a width sized substantially to engage with the one or more recesses of the plate member (100).

10. A method of manufacturing a plate member (100) as claimed in any one of claims 1 - 6 or a retaining clip (200) as claimed in any one of claims 7 -9, comprising stamping the plate member (100) or retaining clip (200) out of a sheet of material in a single step.

11. A kit of parts comprising:
a plate member, the plate member (100) comprising:
one or more locating pins (101) suitable for locating with one or more perforations of a perforated brace band (300); and
a step portion, the step portion comprising at least one aperture configured to guidingly receive the perforated brace band,
the kit further comprising the retaining clip (200) as claimed in any one of claims 7 - 9.

12. A kit of parts as claimed in claim 11 wherein the plate member further comprises one or more recesses (102) located along one or more edges of the plate member (100), the one or more recesses configured to receive a retaining clip (200).

13. A kit of parts as claimed in claim 11 or claim 12, wherein the plate member is a single piece plate member.

14. A kit of parts as claimed in any of claims 11 - 13, wherein the one or more locating pins are integral locating pins.
